(19) Europäisches Patentamt

European Patent Office

Office européen des brevets

(11) **EP 0 754 956 B1**

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(51) Int Cl.$^7$: **G01S 3/86**

(21) Anmeldenummer: **96111274.5**

(22) Anmeldetag: **12.07.1996**

(54) **Verfahren zur Unterdrückung von Körperschallstörungen**

Method of suppression of interference due to acoustic body resonance

Procédé de suppression de perturbations de résonance acoustique d'un corps

(84) Benannte Vertragsstaaten:
**DE FR GB NL**

(30) Priorität: **15.07.1995 DE 19525877**

(43) Veröffentlichungstag der Anmeldung:
**22.01.1997 Patentblatt 1997/04**

(73) Patentinhaber: **STN ATLAS Elektronik GmbH 28309 Bremen (DE)**

(72) Erfinder: **Arens, Egidius, Dipl.-Ing. 28832 Achim (DE)**

(56) Entgegenhaltungen:
**EP-A- 0 401 073          EP-A- 0 568 282**
**DE-A- 3 832 678          US-A- 4 754 282**

## Beschreibung

Die Erfindung betrifft ein Verfahren zur Unterdrückung von Körperschallstörungen bei einer akustischen Ortungsanlage der im Oberbegriff des Anspruchs 1 genannten Art.

In der Wasserschalltechnik werden Ortungsanlagen auf einem Trägerfahrzeug installiert und mit einer Vielzahl von elektroakustischen Wandlern ausgestattet, die auf oder vor einem Träger angeordnet sind. Der Träger ist beispielsweise die Wandung eines U-Boots oder eines Oberflächenschiffs, von dem aus Ziele, z. B. Schiffe, U-Boote oder Torpedos, aufgrund ihres Fahrgeräusches gepeilt werden. Antriebsmaschinen und andere Aggregate auf dem Trägerfahrzeug lassen die Wandungen des Trägerfahrzeugs vibrieren, so daß Körperschall, der auch in das Wasser abgestrahlt wird, von den elektroakustischen Wandlern über die Wandung und über das Wasser empfangen wird. Neben dem störenden Körperschall werden gleichzeitig im gleichen Frequenzbereich Schallwellen, die von den zu ortenden Zielen abgestrahlt werden, empfangen, so daß der Empfang des Körperschalls zu Fehlern in der Peilung führt.

Die gleichen Probleme treten auch bei Ortungsanlagen mit Mikrophonen in der Luftschalltechnik auf, z. B. beim Orten von Hubschraubern von einem Lastkraftwagen oder einem Panzer als Trägerfahrzeug.

In der deutschen Patentanmeldung DE-A 44 32 532 wird zur Störbefreiung vorgeschlagen, Körperschallsensoren bei den Antriebsaggregaten anzuordnen, aus ihren Körperschallsignalen ein Körperschallspektrum zu bilden und mit einem Empfangsspektrum der Empfangssignale der elektroakustischen Wandler die zeitliche Kohärenz zwischen den Empfangssignalen der elektroakustischen Wandler und den Körperschallsignalen der Körperschallaufnehmer zu bestimmen. Wenn die zeitliche Kohärenz zwischen den Empfangssignalen und Körperschallsignalen sehr groß ist, enthält das Empfangsspektrum der Empfangssignale nur Signalanteile, die durch die Vibrationen der Wand verursacht wurden, da nur diese Signalanteile über lange Zeiten phasenstarr sind und nicht schwanken. Die Kohärenz ist klein, wenn von den elektroakustischen Wandlern vom Ziel abgestrahlte Schallwellen empfangen werden, da zwischen Ziel und Trägerfahrzeug stets eine Relativbewegung besteht und somit die Phasenbeziehungen zwischen den Empfangssignalen der elektroakustischen Wandler und den Körperschallsignalen der Körperschallaufnehmer über längere Zeit nicht starr sind.

Der Aufwand einer solchen Störbefreiung ist groß, da mehrere Körperschallaufnehmer eingesetzt werden und die zeitliche Kohärenz zwischen dem Empfangssignal jedes einzelnen elektroakustischen Wandlers und der Körperschallsignale sämtlicher Körperschallaufnehmer berechnet werden muß.

In der europäischen Patentschrift 0 401 073 wird ein Verfahren zur Störbefreiung beschrieben, bei dem ausgenutzt wird, daß sich die Vibrationen der Antriebsmaschinen in Form von Moden oder Eigenwellen in der Wandung des Trägerfahrzeugs der Ortungsanlage ausbreiten. Es wird das Empfangssignal am elektroakustischen Wandler um den Anteil korrigiert, der durch die Schwingungen der Wandung verursacht wird. Von einem Körperschall- oder Beschleunigungsaufnehmer wird die Schwingung, die sich in der Wandung fortpflanzt, am Ort des Beschleunigungsaufnehmers gemessen. Diese Schwingung setzt sich, abhängig von ihrer Einspeisung und der Struktur der Wandung aus mehreren Eigenwellen oder Schwingungsmodi zusammen. Aus Messungen der Schnelle an mehreren Orten der Wandung läßt sich mit Hilfe der Wellengleichung Ursprungsamplitude und Ursprungsphase der Schwingung bestimmen. Durch Modellrechnung oder Eichung wird die Transferimpedanz für jeden betrachteten Schwingungsmodus, die den Zusammenhang zwischen Schalldruck und Schallschnelle bestimmt, ermittelt. Ursprungsamplitude und Phase der Schwingung werden für jeden Schwingungsmodus mit der Transferimpedanz verknüpft und liefern den Anteil am Empfangssignal des elektroakustischen Wandlers unabhängig von seiner Ursache. Dieses Verfahren ist sehr aufwendig, da abgesehen von der Vielzahl der zu verwendenden Körperschall- oder Beschleunigungsaufnehmer noch zusätzlich eine Modellrechnung oder eine Eichung durchgeführt werden muß, um die Transferimpedanz für jeden betrachteten Schwingungsmodus zu berechnen. Da das Trägerfahrzeug ein kompliziert geformter geometrischer Körper ist, bilden sich mehrere verschiedene Schwingungsmodi aus.

Es ist Aufgabe der vorliegenden Erfindung, ein Verfahren der im Oberbegriff des Anspruchs 1 genannten Art zu schaffen, bei dem keine zusätzlichen Körperschallaufnehmer benötigt werden und auf das Lösen der Wellengleichung, um den Ausbreitungsmechanismus des Körperschalls zu bestimmen, verzichtet wird.

Diese Aufgabe wird erfindungsgemäß durch die im Kennzeichenteil des Anspruchs 1 genannten Merkmale gelöst.

Bei der Störbefreiung nach dem erfindungsgemäßen Verfahren werden die Empfangssignale der einzelnen elektroakustischen Wandler der Ortungsanlage bezüglich ihres Körperschallanteils nicht mit Körperschallsignalen verglichen, sondern es werden diese Empfangssignale durch Phasen- oder Laufzeitkompensation zu Gruppensignalen benachbarter Richtcharakteristiken zusammengefaßt und im Muster der Richtcharakteristiken der Körperschall unterdrückt.

Betrachtet man das Gruppensignal einer Richtcharakteristik, das in eine bestimmte Empfangsrichtung weist, so erhält man einen frequenzabhängigen Signalwert, der größer als Signalwerte benachbarter Richtcharakteristiken ist, wenn die Empfangsrichtung auf ein schallabstrahlendes Ziel weist. Während einer Beobachtungszeitspanne nimmt der Signalwert ab und der Signalwert der benachbarten Richtcharakteristik zu, da das Ziel bezüglich der Ortungsanlage einen anderen Ort angenommen hat. Mittelt man das Gruppensignal der zuerst betrachteten Richtcharakteristik über diese Beobachtungszeitspanne, so erhält man einen frequenzabhängigen Referenzwert einer Referenzrichtcharakteristik der durch Vibrationen der Wandung verursacht wird. Der Referenzwert setzt sich aus den von den Wandlern über die Wandung und das Wasser empfangenen Körperschallschwingungen zusammen und täuscht einen Empfang von Schallwellen aus einer Empfangsrichtung vor, in die die Referenzrichtcharakteristik weist. Der frequenzabhängige Referenzwert bleibt im zeitlichen Mittel konstant, solange sich der Betriebszustand der an Bord des Trägerfahrzeugs befindlichen Maschinen nicht ändert, im Gegensatz zu dem Signalwert der Richtcharakteristik, der durch ein schallabstrahlendes Ziel bewirkt wird. Der Referenzwert ist sehr klein, wenn kein Körperschall empfangen wird.

Zur Ermittlung der Einfallsrichtung des Schalls einer außerhalb des Trägerfahrzeugs befindlichen Schallquelle, werden Phasenunterschiede der Schallwellenfront an den unterschiedlichen Orten der Wandler kompensiert. Diese Phasenunterschiede sind über kurze Zeitintervalle wegen der geringen Relativbewegung zwischen schallabstrahlendem Ziel und Trägerfahrzeug konstant, ändern sich aber innerhalb einer Beobachtungszeitspanne, der mehrere Zeitintervalle umfaßt, da das Ziel nun vor der benachbarten Richtcharakteristik erfaßt wird. Im Gegensatz dazu ändern sich die an den Orten der Wandler bestehenden Phasenunterschiede der Schwingungen der Wandungen nicht, da die verursachenden Maschinen ortsfest im Trägerfahrzeug installiert sind. Faßt man die durch diese Schwingungen verursachten Empfangssignale der elektroakustischen Wandler zu einer Richtcharakteristik zusammen, so ändert sich der Signalwert dieser Richtcharakteristik über der Zeit ebenfalls nicht. Betrachtet man jetzt die Signalwerte benachbarter Richtcharakteristiken, so bleiben sie konstant, wenn nur Körperschall von den Wandlern empfangen wird, und ändern sich, wenn auch Schall von einer sich bewegenden Schallquelle empfangen wird. Das zeitliche Auswandern des Ziels aus einer Empfangsrichtung ist zugleich ein räumliches Auswandern des Ziels, nämlich ein winkelmäßiger Übergang von einer Empfangsrichtung in die Empfangsrichtung der benachbarten Richtcharakteristik, während die durch die Vibration der Wand vorgetäuschte Empfangsrichtung der Referenzrichtcharakteristik unverändert bleibt. Die Ermittlung einer räumlichen Kohärenz zwischen den Richtcharakteristiken und Referenzrichtcharakteristiken gibt das Auswandern an.

Die räumliche Kohärenz wird durch Verknüpfung der momentanen Signalwerte der Richtcharakteristiken und den Referenzwerten der in die gleichen Richtungen weisenden Referenzrichtcharakteristiken bestimmt. Der Referenzwert wird durch zeitliche Mittelung der Signalwerte der in eine betrachtete Empfangsrichtung weisenden Richtcharakteristik gewonnen oder durch Autokorrelation. Die räumliche Kohärenz ist frequenzabhängig und weist Spektralanteile bis zu einem Wert von nahezu "1" bei Frequenzen auf, die den Drehzahlen der an Bord befindlichen Maschinen und ihren Harmonischen entsprechen. Der Wert ist wesentlich kleiner als "1", wenn außer Körperschall Schallwellen von einem Ziel unter der gleichen Empfangsrichtung der Richtcharakteristik empfangen werden. Zur Störbefreiung werden die Signalwerte der Richtcharakteristiken mit der räumlichen Kohärenz multipliziert und abgezogen.

Der Vorteil des erfindungsgemäßen Verfahrens besteht insbesondere darin, daß die zeitliche Invarianz der Phasenbeziehungen der Körperschallschwingungen ausgenutzt wird, die beim Bilden von Richtcharakteristiken mit den Empfangssignalen der elektroakustischen Wandler der Ortungsanlage zu zeitkonstanten Signalwerten der Gruppensignale in spezielle, räumlich gleichbleibende Empfangsrichtungen führen. Mit dem erfindungsgemäßen Verfahren wird in das Muster der Richtcharakteristiken bei diesen speziellen Empfangsrichtungen sog. Nullstellen bei den Frequenzen des Körperschalls erzeugt.

Bedingt durch die spezielle geometrische Form des Trägerfahrzeugs bilden sich Referenzrichtcharakteristiken nur in einigen Empfangsrichtungen aus, so daß nicht Signalwerte aller Richtcharakteristiken, sondern nur der in diese Empfangsrichtungen weisenden Richtcharakteristiken und auch nicht die Empfangssignale aller Wandler bewertet werden müssen.

Weiterhin ist von Vorteil, daß keine speziellen Körperschallsensoren oder Beschleunigungsaufnehmer an unterschiedlichen Orten des Trägerfahrzeugs vorzusehen sind, sondern die ohnehin vorhandenen elektroakustischen Wandler und Schalteinrichtungen zur Richtungsbildung der Richtcharakteristiken auch die Signale zum Ermitteln einer Körperschallkompensation liefern. Ein weiterer besonderer Vorteil besteht darin, daß die Referenzwerte der Referenzrichtcharakteristiken aus Empfangssignalen der elektroakustischen Wandler bei unterschiedlichen Betriebszuständen der Maschinen im eingebauten Zustand ohne zusätzlichen Simulationsaufwand bestimmt werden können. Es werden auch strömungsinduzierte Schwingungen des Trägerfahrzeugs unterdrückt, wenn die Referenzwerte während einer Missionsfahrt bei Betrieb der Ortungsanlage bestimmt werden. Dieser Betrieb bietet außerdem den großen Vorteil, daß die Störbefreiung unmittelbar während des Einsatzes adaptiv erfolgt.

Vorteilhaft ist es, die Gruppensignale der Richtcharakteristiken mit der räumlichen Kohärenz zu multiplizieren und von den Gruppensignalen abzuziehen, wie in Anspruch 2 angegeben.

In der Weiterbildung des erfindungsgemäßen Verfahrens nach Anspruch 3 wird aus Spektrallinien der Gruppensignale benachbarter Richtcharakteristiken eine Winkelfunktion in Abhängigkeit von den Empfangsrichtungen gebildet, wie es in der DE-OS 38 32 678 beschrieben ist. Die Autokorrelationsfunktion des Winkelfunktionsverlaufs innerhalb der Beobachtungszeitspanne liefert eine Referenzwinkelfunktion, die bei den Empfangsrichtungen der Referenzrichtcharakteristiken Maxima aufweist. Die Referenzwinkelfunktion wird mit der momentanen Winkelfunktion multipliziert. Das Produkt weist als Variable die Empfangsrichtung und die Frequenz der Körperschallschwingungen auf. Je Frequenz werden die Produkte für alle Empfangsrichtungen aufsummiert. Die Summe ist ein Maß für die räumliche Kohärenz der Richtcharakteristiken und dient unmittelbar zur Bewertung jeder einzelnen Richtcharakteristik. Der Vorteil der frequenzselektiven Signalverarbeitung besteht darin, daß durch die Multiplikation nur die Spektrallinien einen Beitrag zur Kohärenz liefern, die durch die Vibration verursacht sind, während alle anderen Anteile nahezu gleich "Null" sind. Durch Differenzbildung gemäß Anspruch 4 erhält man die von Körperschall befreiten Richtcharakteristiken.

Rechentechnisch besonders einfach zu realisieren ist die Weiterbildung des erfindungsgemäßen Verfahrens nach den Ansprüchen 5 und 6, bei der eine Fourier-Transformation der Empfangssignale aller Wandler in ein Raumspektrum vom Ortsbereich in einen Raumfrequenzbereich durchgeführt wird. Die Empfangsrichtungen entsprechen dann Raumfrequenzen. Die Autokorrelationsfunktion des Raumspektrums weist Linien bei denjenigen Raumfrequenzen auf, die den Empfangsrichtungen der Referenzrichtcharakteristiken entsprechen, und liefert somit ein Referenzmodenraumspektrum, das den Referenzrichtcharakteristiken oder der Referenzwinkelfunktion entspricht. Raumspektrum und Referenzmodenraumspektrum werden miteinander konjugiert komplex multipliziert. Das Produkt liefert Linien bei Raumfrequenzen, bei denen nur Körperschall oder Körperschall zusammen mit von einem Ziel abgestrahlten Nutzschall auftreten. Es wird die Summe dieser Linien innerhalb eines Raumfrequenzintervalls gebildet, das mehrere benachbarte Empfangsrichtungen innerhalb eines Winkelsektors umfaßt, und zur Bewertung des Raumspektrums benutzt. Durch die Summenbildung erhält man ein Kreuzspektrum, welches ein Maß für die räumliche Kohärenz zwischen Raumspektrum und Referenzmodenraumspektrum ist und von der Frequenz des Körperschalls abhängig ist. Eine Normierung des Kreuzspektrums nach Anspruch 6 ergibt die räumliche Kohärenz zwischen Raumspektrum und Referenzmodenraumspektrum. Es wird das Leistungsraumspektrum und Leistungsmodenraumspektrum gemäß der vorteilhaften Weiterbildung nach Anspruch 7 durch Summation des Betragsquadrats über den Raumfrequenzen gebildet und miteinander multipliziert und der Reziprokwert mit dem konjugiert komplexen Produkt des Kreuzspektrums multipliziert. Durch diese Maßnahmen wird der Ausbreitungsmechanismus der Schwingungsmodi der Wandung berücksichtigt.

Die räumliche Kohärenz nimmt nunmehr Werte zwischen "0" und "1" an. Die räumliche Kohärenz ist bei Frequenzen, mit denen die Wandung des Trägerfahrzeugs schwingt, nahezu "1", wenn im wesentlichen Schwingungen der Wandung einen Schalleinfall vortäuschen und Raumspektrum und Referenzmodenraumspektrum wegen der ortsabhängig invarianten Phasenunterschiede der Schwingung der Wandung raumkonstant sind.

Das Raumspektrum wird gemäß der vorteilhaften Weiterbildung nach Anspruch 8 mit der räumlichen Kohärenz multipliziert und vom Raumspektrum abgezogen.Die Differenz wird aus dem Raumfrequenzbereich in den Ortsbereich rücktransformiert.

Die Rücktransformierte ist eine Funktion des Ortes und der Frequenz. Die Empfangssignale der Wandler werden ortsabhängig mit der Rücktransformierten multipliziert und einem Richtungsbildner zugeführt, so daß die daraus gebildeten Richtcharakteristiken Nullstellen für die Körperschallstörungen aufweisen.

Der Vorteil der Weiterbildungen des erfindungsgemäßen Verfahrens nach den Ansprüchen 5 bis 8 besteht darin, daß über das Bilden des Raumspektrums auch eine Bewertung der Empfangssignale selbst möglich ist, ohne daß die Körperschallstörung am Ort des Wandlers im einzelnen ermittelt werden muß.

Weiterhin ist von Vorteil, daß Ziele nicht ausgeblendet werden, auch wenn sie Signalanteile bei den Frequenzen des Körperschalls aufweisen, da dann die räumliche Kohärenz für diese Frequenzen kleiner als "1" ist. Um ein Weglernen von Zielen zu verhindern, wird eine Schwelle vor der Normierung des Kreuzspektrums vorgesehen, die eine Berechnung der räumlichen Kohärenz verhindert, wenn das konjugiert komplexe Produkt aus Raumspektrum und Referenzmodenraumspektrum keine signifikanten Linien aufweist. Die Kohärenz wird dann auf einen sehr kleinen Wert nahezu "0" gesetzt, da keine Körperschallstörungen vorliegen oder sehr starke Ziele von der Ortungsanlage aufgefaßt werden und somit eine Störbefreiung nicht nötig ist.

Die vorteilhafte Weiterbildung des erfindungsgemäßen Verfahrens nach Anspruch 9 bietet die Möglichkeit, die räumliche Kohärenz zwischen den momentan gebildeten Richtcharakteristiken oder dem momentan gebildeten Raumspektrum mit abgespeicherten Referenzrichtcharakteristiken oder Referenzraumspektren zu ermitteln, die zu einem Zeitpunkt aufgenommen wurden, als nur Körperschallstörungen von den elektroakustischen Wandler empfangen wurden, weil sich kein schallabstrahlendes Ziel im Auffaßbereich der Ortungsanlage befand.

Der Vorteil dieser Weiterbildung besteht darin, daß bei Auffassen eines Ziels unverzüglich eine Detektion und Peilung möglich ist, da eine Beobachtungszeitspanne zum Erstellen des Refrenzraumspektrums oder der Referenzrichtcharakteristiken nicht abgewartet werden muß, so daß ein sog. Weglernen von Zielen auch kurzfristig nicht eintritt.

Referenzrichtcharakteristiken oder Referenzraumspektren können gemäß der vorteilhaften Weiterbildung des erfindungsgemäßen Verfahrens nach Anspruch 10 auch aus Signalen mehrerer Körperschallaufnehmer ermittelt werden, wenn diese ohnehin an Bord des Trägerfahrzeugs an unterschiedlichen Installationsorten angeordnet sind. Es muß hierfür entweder eine Anordnung zur Richtungsbildung oder eine Anordnung zur Fourier-Transformation bereitgestellt werden, die unter Berücksichtigung des Installationsorts der Körperschallaufnehmer Richtcharakteristiken in die gleichen Empfangsrichtungen wie die Ortungsanlage erstellt oder das Referenzmodenraumspektrum berechnet.

Der Vorteil besteht darin, daß Referenzrichtcharakteristiken oder das Referenzmodenraumspektrum nur für Frequenzen ermittelt werden, die den Drehzahlen und Harmonischen der Drehzahlen der Maschinen entsprechen und eine zeitliche Mittelung oder Autokorrelation entfällt.

Gemäß der vorteilhaften Weiterbildung des erfindungsgemäßen Verfahrens nach Anspruch 11 wird die räumliche Kohärenz nur für eine bestimmte Anzahl von Frequenzen bestimmt, die im Körperschall-Frequenzspektrum auftreten.

Eine Frequenzauswahl erfolgt gemäß Anspruch 12 aus dem Empfangssignal eines der elektroakustischen Wandler oder dem Gruppensignal einer Richtcharakteristik durch Spektralanalyse, insbesondere dann, wenn kein hoher Zielpegel an einem Gruppensignal oder einem Empfangssignal zu vermerken ist. Eine andere Möglichkeit gibt Anspruch 13 an. Das Signal eines einzelnen Körperschallsensors wird einer Frequenzanalyse unterzogen und die Frequenzen mit den maximal auftretenden Spektrallinien zum Bestimmen der räumlichen Kohärenz ausgewählt.

Nachdem eine maximale Frequenz der Schwingungen oder des Empfangssignals bestimmt wurde, wird nach der vorteilhaften Weiterbildung des erfindungsgemäßen Verfahrens nach Anspruch 13 eine obere Raumgrenzfrequenz ermittelt, die abhängig ist von der maximalen Frequenz, der Größe der Antenne der Ortungsanlage und dem Winkelsektor, innerhalb dessen gepeilt werden soll. Raumfrequenzanteile des Raumspektrums, die oberhalb dieser Raumgrenzfrequenz liegen, werden für die Berechnung der räumlichen Kohärenz auf Null gesetzt, um ein "Weglernen" von Zielen zu verhindern und gleichzeitig laute Ziele, die gut erkennbar sind, nicht zu unterdrücken.

Danach wird das mit der räumlichen Kohärenz verknüpfte Raumspektrum für eine Bewertung der Empfangssignale der Wandler in den Ortsbereich rücktransformiert. Der besondere Vorteil des erfindungsgemäßen Verfahrens nach Anspruch 14 besteht darin, daß Rechenaufwand und -zeit durch diese Maßnahme erheblich reduziert werden. Besonders vorteilhaft ist es, nach Detektion eines Ziels den Winkelsektor und damit die Raumgrenzfrequenz zu verkleinern und somit die Anzahl von Richtcharakteristiken zum Bestimmen der Referenzrichtcharakteristiken bzw. den Raumfrequenzbereich zum Bestimmen des Referenzmodenraumspektrums zu begrenzen, um ein gezieltes Vorgehen gegen Körperschallstörungen zu sichern.

Vorrichtungen zum Ausüben des erfindungsgemäßen Verfahrens sind in den Ansprüchen 15 bis 18 angegeben. Eine Antenne mit elektroakustischen Wandlern ist vor oder auf einer Wandung des Trägerfahrzeugs der Ortungsanlage angeordnet. Empfangssignale der elektroakustischen Wandler werden in einem Richtungsbildner zu Richtcharakteristiken oder einer Winkelfunktion oder einem Raumspektrum zusammengefaßt. In einem nachgeordneten Mittelwertrechner werden durch Autokorrelation oder zeitliche Mittelung Referenzrichtcharakteristiken oder eine Referenzwinkelfunktion oder ein Referenzmodenraumspektrum bestimmt. Der Richtungsbildner ist außerdem mit einer Leistungsrechenstufe verbunden, die das Betragsquadrat der Gruppensignale und die Summe über den betrachteten Winkelsektor bildet oder die Leistung der Winkelfunktion innerhalb des Winkelsektors berechnet oder das Leistungsraumspektrum bildet, indem das Betragsquadrat des Raumspektrums integriert oder über der Raumfrequenz summiert wird. Die gleichen Rechenvorgänge werden in einer dem Mittelwertrechner nachgeschalteten Leistungsrechenschaltung durchgeführt, um die entsprechenden Leistungswerte für die Referenzrichtcharakteristiken, die Referenzwinkelfunktion oder das Referenzmodenraumspektrum zu bestimmen. In einer Kreuzspektrum-Rechenschaltung werden durch Multiplikation und Integration das konjugiert komplexe Produkt der Richtcharakteristiken und Referenzrichtcharakteristiken oder der Winkelfunktion und Referenzwinkelfunktion gebildet und über den Winkelsektor integriert bzw. es wird das konjugiert komplexe Produkt aus Raumspektrum und Referenzraumspektrum gebildet und über den Raumfrequenzen zum Kreuzspektrum aufaddiert. Die Ausgangssignale der Kreuzspektrum-Rechenschaltung, der Leistungsrechenstufe und der Leistungsrechenschaltung werden in einer Kohärenzschaltung miteinander zur räumlichen Kohärenz verknüpft und in einem Multiplizierblock mit den von Körperschallstörungen zu befreienden Richtcharakteristiken bzw. Winkelfunktion bzw. Raumspektrum verknüpft. Bei einer Berechnung im Raumfrequenzbereich ist dem Richtungsbildner ein Raumfrequenztiefpaß nachgeordnet, dem sich die Rechenschaltungen zum Bestimmen der räumlichen Kohärenz anschließen. Das bewertete Raumspektrum wird in den Ortsbereich rücktransformiert. Mit der Rücktransformierten des bewerteten Raumspektrums wird der Richtungsbildner für ein Shading der Empfangssignale angesteuert.

Die verwendeten Rechenschaltungen sind beim heutigen Stand der Rechnertechnik in der Lage, die anfallenden Daten in Echtzeit zu verarbeiten und nach der Beobachtungszeitspanne laufend die räumliche Kohärenz zu berechnen, um eine Störbefreiung der Richtcharakteristiken, der Winkelfunktion oder des Raumspektrums zu erzielen. Mögliche Rechenverfahren sind z. B. Gram-Smith-Verfahren oder van Trees Correlator-Estimator-Subtractor-Verfahren.

Die Erfindung ist anhand eines Ausführungsbeispiels für ein Verfahren zur Unterdrückung von Körperschallstörungen bei einer akustischen Ortungsanlage in der Zeichnung näher erläutert. Es zeigen:

Fig. 1                    ein Blockschaltbild,

Fig. 2                    ein Diagramm mit Empfangssignalen über dem Wandlerort,

Fig. 3                                    eine Winkelfunktion,

Fig. 4.1 und 4.1.1                         Raumspektren zum Empfangszeitpunkt $t_1$,

Fig. 5.1 bis 5.5 und 5.1.1                 Raumspektren zum Empfangszeitpunkt $t_2$,

Fig. 6.1 und 6.1.1                         Raumspektren zum Empfangszeitpunkt $t_3$,

Fig. 7.1 bis 7.5                           Referenzmodenraumspektren,

Fig. 8.1                                   ein Produktdiagramm,

Fig. 8.2                                   Diagramm eines Kreuzspektrums,

Fig. 9                                     Diagramm eines Leistungsraumspektrums,

Fig. 10                                    Diagramm eines Leistungsmodenraumspektrums,

Fig. 11                                    Diagramm der räumlichen Kohärenz,

Fig. 12                                    ein Bewertungsdiagramm,

Fig. 13                                    ein von Körperschallstörungen befreites Raumspektrum.

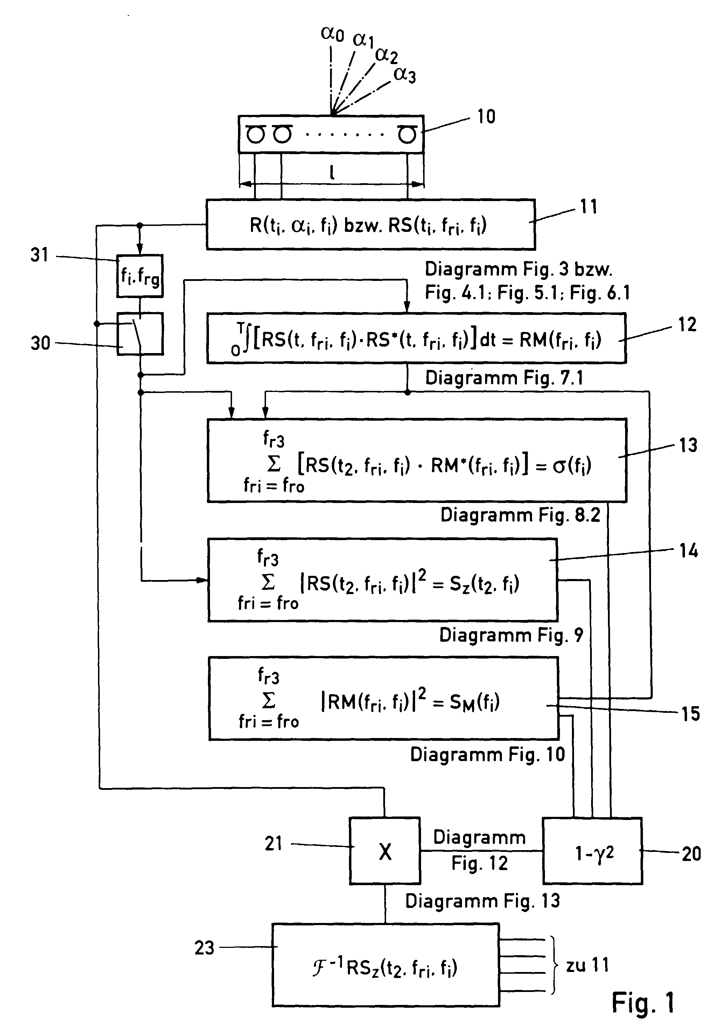

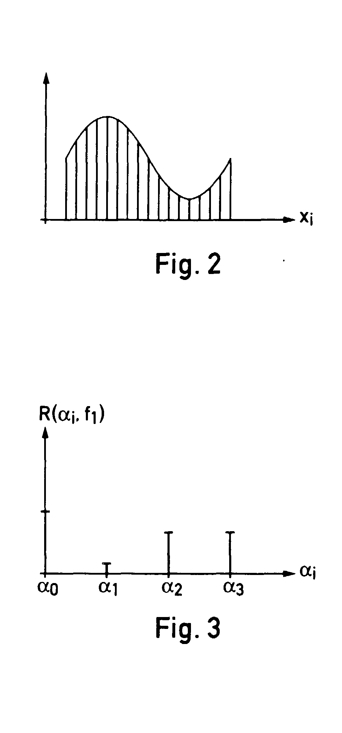

An Bord eines Trägerfahrzeugs befindet sich gemäß Fig. 1 eine akustische Ortungsanlage mit einer Antenne 10 und ihren elektroakustischen Wandlern, die vor oder auf einer Wandung des Trägerfahrzeugs befestigt ist. Antriebsaggregate oder andere an Bord befindliche Maschinen lassen die Wandung vibrieren, so daß auf die Wandler der Antenne 10 Körperschall einerseits über die Wandung selbst, andererseits über das umgebende Wasser gelangt. Der Antenne 10 ist ein Richtungsbildner 11 nachgeordnet. Die Empfangssignale der elektroakustischen Wandler enthalten Frequenzanteile der Frequenzen $f_i$. Sie sind in Fig. 2 über dem jeweiligen Wandlerort x gezeigt sind. Diese Empfangssignale werden im Richtungsbildner 11 in Gruppensignale benachbarter Richtcharakteristiken, frequenzselektive Winkelfunktionen R oder in ein Raumspektrum RS umgewandelt.

Zum Empfangszeitpunkt $t_i$ weist jedes Gruppensignal der Empfangsrichtung $\alpha_i$ Frequenzen $f_i$ auf. Das Diagramm in Fig. 3 zeigt eine Winkelfunktion R $(t_2, \alpha_i)$ über den Empfangsrichtungen $\alpha_i$ zum Empfangszeitpunkt $t_2$ für die Frequenz $f_i = f_1$ .

Vergleichbar mit den Winkelfunktionen $R(t_2, \alpha_i)$ je Frequenz $f_i$ zum Empfangszeitpunkt $t_2$ ist ein Raumspektrum $RS(t_2, f_{ri}, f_i)$, das aus den Empfangssignalen (Fig. 2) der elektroakustischen Wandler gebildet wird, wie es beispielsweise in der DE-C- 29 27 790 beschrieben ist. Die Raumfrequenz $f_{ri}$ ist ein Maß für die Empfangsrichtung $\alpha_i$ und ist abhängig von der Länge l der Antenne 10 und der Frequenz $f_i$:

$$f_{ri} = \frac{l \cdot f_i}{c} \sin \alpha_i \ .$$

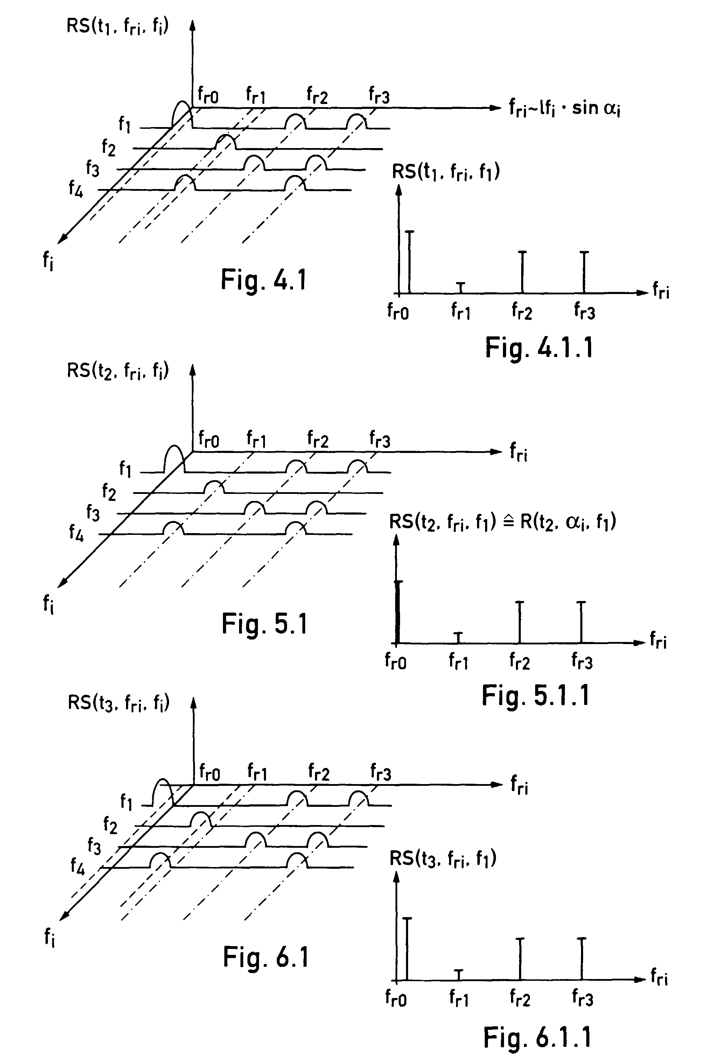

Am Ausgang des Richtungsbildners 11 sind innerhalb einer Beobachtungszeitspanne zu den Empfangszeitpunkten $t_1$, $t_2$ und $t_3$ die Raumspektren $RS(t_i, f_{ri}, f_i)$ gemäß Fig. 4.1, Fig. 5.1 und Fig. 6.1 gebildet worden.

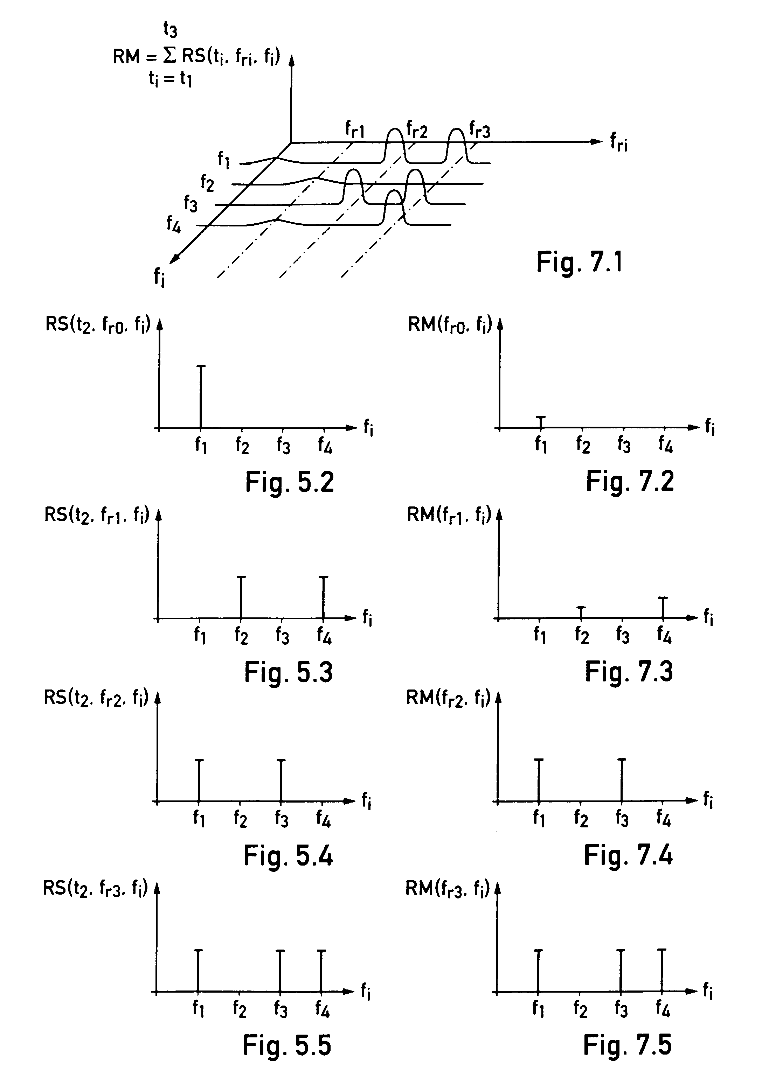

Fig. 5.1 zeigt das Raumspektrum $RS(t_2, f_{ri}, f_i)$ zum Empfangszeitpunkt $t_2$ in Abhängigkeit von den Raumfrequenzen $f_{ri}$ und den Frequenzen $f_i$ der Empfangssignale. Bei der Raumfrequenz $f_{r0}$, die der Empfangsrichtung $\alpha_0$ entspricht, liegt ein Maximum für die Frequenz $f_1$ und keine weitere Komponente bei den Frequenzen $f_2$, $f_3$ und $f_4$ vor. Bei der Raumfrequenz $f_{r1}$, die der Empfangsrichtung $\alpha_1$ entspricht, sind bei den Frequenzen $f_2$ und $f_4$ Komponenten zu verzeichnen. Bei der Raumfrequenz $f_{r2}$, die der Empfangsrichtung $\alpha_2$ entspricht, sind bei den Frequenzen $f_1$ und $f_3$ Komponenten vorhanden. Bei der Raumfrequenzen $f_{r3}$ treten bei den Frequenzen $f_1$, $f_3$ und $f_4$ Komponenten auf.

Das Diagramm in Fig. 5.1.1 zeigt das Raumspektrum RS $(t_2, f_{ri}, f_1)$ für die Frequenz $f_1$ zum Empfangszeitpunkt $t_2$ in Abhängigkeit von der Raumfrequenz $f_{ri}$. Man sieht, daß bei der Raumfrequenz $f_{r0}$ ein Maximum zu verzeichnen ist. Dieses Raumspektrum RS $(t_2, f_{ri}, f_1)$ ist identisch mit der Winkelfunktion R $(t_2, \alpha_i)$ die in Fig. 3 gezeigt ist.

Fig. 4.1 zeigt das Raumspektrum $RS(t_1, f_{ri}, f_i)$ zum Empfangszeitpunkt $t_1$, der vor dem Empfangszeitpunkt $t_2$ liegt. Der Unterschied zwischen den Raumspektren in Fig. 4.1 und Fig. 5.1 besteht darin, daß sich bei der Frequenz $f_1$ das Maximum bei der Raumfrequenz $f_{r0}$ verschoben hat, während die Maxima bei den Raumfrequenzen $f_{r2}$ und $f_{r3}$

raumfest geblieben sind. Ebenso haben sich die Maxima bei der Raumfrequenz $f_{r1}$ für die Komponenten $f_2$ und $f_4$ verschoben. Bei der Raumfrequenz $f_{r3}$ haben sich die Komponenten mit den Frequenzen $f_1$, $f_3$, $f_4$ im Vergleich zum Empfangszeitpunkt $t_1$ nicht verändert. Man kann also feststellen, daß sich das Raumspektrum $RS(t_2, f_{ri}, f_i)$ gegenüber dem Raumspektrum $RS(t_1, f_{ri}, f_i)$ bei den Raumfrequenzen $f_{r0}$ und $f_{r1}$ verändert hat, während es bei den Raumfrequenzen $f_{r2}$ und $f_{r3}$ ortsfest geblieben ist.

Fig. 6.1 zeigt einen späteren Empfangszeitpunkt $t_3$. Hier ist im Vergleich zu Fig. 4.1 und Fig. 5.1 zu erkennen, daß die Komponenten bei den Raumfrequenzen $f_{r2}$ und $f_{r3}$ ortsfest geblieben sind, während die Komponenten bei den Raumfrequenzen $f_{r0}$ und $f_{r1}$ sich weiter von rechts nach links verschoben haben. Aus diesem Vergleich der Raumspektren $RS(t_i, f_{ri}, f_i)$ gemäß Fig. 4.1 bis Fig. 6.1 und Fig. 4.1.1 bis Fig. 6.1.1 ist ersichtlich, daß sich unter den Raumfrequenzen $f_{r0}$ und $f_{r1}$ Ziele befinden, während sich bei den Raumfrequenzen $f_{r2}$ und $f_{r3}$ Komponenten ausgebildet haben, die auf Körperschall zurückzuführen sind, da sie raumfest sind. Diese Eigenschaft wird von dem erfindungsgemäßen Verfahren ausgenutzt.

Fig. 4.1.1, Fig. 5.1.1 und Fig. 6.1.1 zeigen Raumspektren über den Raumfrequenzen $f_{ri}$ zu den Empfangszeitpunkten $t_1$, $t_2$, $t_3$ bei der Frequenz f1. Auch hier sieht man deutlich, daß die Komponenten bei den Raumfrequenzen $f_{r2}$, $f_{r3}$ raumfest sind, während sich die Komponenten bei der Frequenz $f_{r0}$ von rechts nach links verschoben haben. Die zweidimensionale Darstellung des Raumspektrums RS für unterschiedliche Frequenzen $f_i$ entspricht der Winkelfunktion R, die die Gruppensignale der Richtcharakteristiken in Abhängigkeit von der Empfangsrichtung $\alpha_i$ für unterschiedliche Frequenzen $f_i$ wiedergibt.

Dem Richtungsbildner 11 ist in Fig. 1 ein Mittelwertrechner 12 nachgeordnet, der während der Beobachtungszeitspanne $t_1$ bis $t_3$ den Mittelwert über die Raumspektren $RS(t_i, f_{ri}, f_i)$ bildet, indem die Autokorrelationsfunktion des Raumspektrums berechnet wird, die ein Referenzmodenraumspektrum $RM(f_{ri}, f_i)$ liefert. Das Referenzmodenraumspektrum $RM(f_{ri}, f_i)$ ist in Fig. 7.1 in Abhängigkeit von der Raumfrequenz $f_{ri}$ und der Frequenz $f_i$ gezeigt. Für die Frequenz $f_1$ sind Maxima bei den Raumfrequenzen $f_{r2}$ und $f_{r3}$ zu verzeichnen. Für die Frequenz $f_2$ gibt es kein ausgeprägtes Maximum. Für die Frequenz $f_3$ liegen Maxima bei den Raumfrequenzen $f_{r2}$ und $f_{r3}$ vor, für die Frequenz $f_4$ gibt es ein Maximum bei der Raumfrequenz $f_{r3}$. Die Komponenten im Raumspektrum $RS(t_2, f_{ri}, f_i)$ bei den Raumfrequenzen $f_{r0}$ und $f_{r1}$ sind durch die Mittelwertbildung eingeebnet worden und wesentlich geringer als bei den Raumfrequenzen $f_{r2}$ und $f_{r3}$. Das Referenzmodenraumspektrum $RM(t_2, f_{ri}, f_i)$ entspricht einem Raumspektrum, wenn kein Zielgeräusch, sondern lediglich Körperschall von den elektroakustischen Wandlern über die Wandung und über das Wasser empfangen wird.

Es gilt nun, die Körperschallstörungen im Raumspektrum $RS(t_2, f_{ri}, f_i)$ oder der Gruppensignale der Richtcharakteristiken bzw. der Winkelfunktionen zu unterdrücken. In einer Kreuzspektrum-Rechenschaltung 13 wird das Kreuzspektrum $\sigma(f_i)$ zwischen dem Raumspektrum $RS(t_2, f_{ri}, f_i)$ und dem Referenzmodenraumspektrum $RM(f_{ri}, f_i)$ gebildet, indem das konjugiert komplexe Produkt P gebildet und über den Raumfrequenzen $f_{ri}$ aufaddiert oder integriert wird. Das Raumspektrum $RS(t_2, f_{ri}, f_i)$ zum Empfangszeitpunkt $t_2$ ist in Fig. 5.1 in dreidimensionaler Darstellung gezeigt. Fig. 5.2 bis Fig. 5.5 zeigen zweidimensionale Darstellungen des gleichen Raumspektrums $RS(t_2, f_i)$ zum Empfangszeitpunkt $t_2$ in Abhängigkeit von der Frequenz $f_i$ für die einzelnen vier Raumfrequenzen $f_{r0}$ bis $f_{r3}$. In Fig. 5.2 sieht man, daß lediglich eine Komponente bei der Frequenz $f_1$ such unter der Raumfrequenz $f_{r0}$ ausgebildet hat. Die Komponenten bei den Frequenzen $f_2$ und $f_4$ liefern Anteile für die Raumfrequenz $f_{r1}$, wie in Fig. 5.3 gezeigt. Fig. 5.4 zeigt die Komponenten bei den Frequenzen $f_1$ und $f_3$ für die Raumfrequenz $f_{r2}$. Fig. 5.5 zeigt die Komponenten bei den Frequenzen $f_1$, $f_3$, $f_4$ für die Raumfrequenz $f_{r3}$.

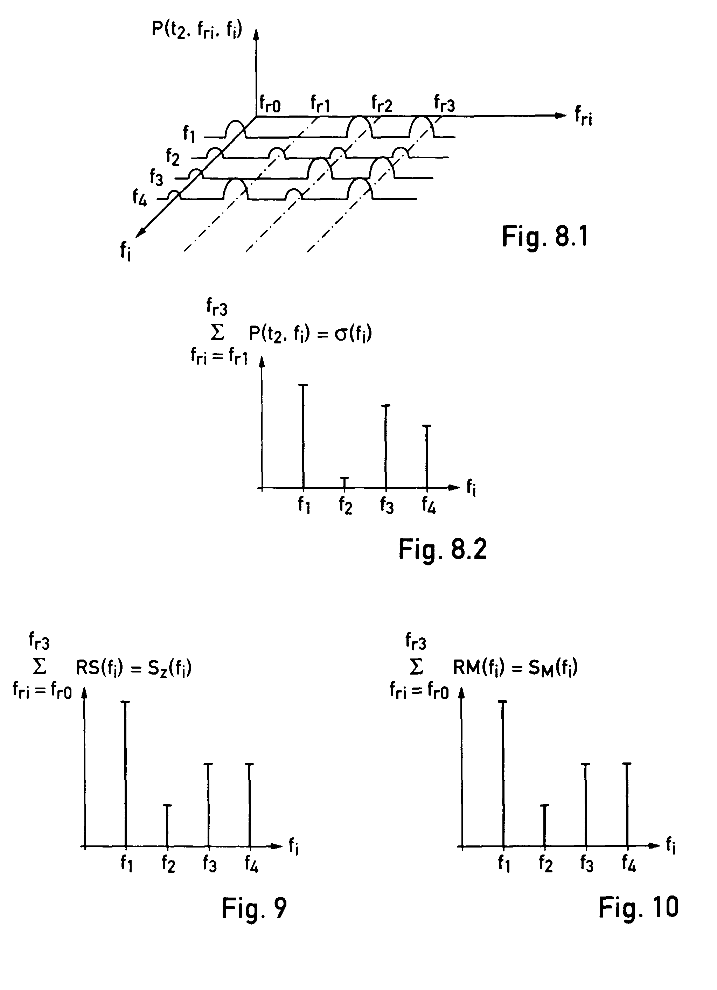

Fig. 7.2 bis Fig. 7.5 zeigen zweidimensionale Darstellungen des Referenzmodenraumspektrums $RM(f_{ri}, f_i)$ aus Fig. 7.1 in Abhängigkeit von der Frequenz $f_i$ für die einzelnen Raumfrequenzen $f_{r0}$ bis $f_{r3}$. Man sieht in Fig. 7.2, daß nur eine sehr kleine Komponente bei der Frequenz $f_1$ zu verzeichnen ist, die sich unter der Raumfrequenz $f_{r0}$ ausgebildet hat. Fig. 7.3 zeigt die Komponenten bei den Frequenzen $f_2$ und $f_4$, die in die Empfangsrichtung der Raumfrequenz $f_{r1}$ weisen. Fig. 8.3 zeigt Komponenten bei den Frequenzen $f_1$ und $f_3$, die in die Empfangsrichtung der Raumfrequenz $f_{r2}$ weisen und Fig. 8.4 zeigt die Komponenten $f_1$, $f_3$ und $f_4$, die in die Empfangsrichtung der Raumfrequenz $f_{r3}$ weisen.

Das Kreuzspektrum $\sigma(f_i)$ wird jetzt dadurch gebildet, daß das Raumspektrum $RS(t_2, f_{ro}, f_i)$ gemäß Fig. 5.2 mit dem Modenraumspektrum $RM(f_{ro}, f_i)$ gemäß Fig. 7.2 multipliziert wird, ebenso das Raumspektrum $RS(t_2, f_{ri}, f_i)$ in Fig. 5.3 mit dem Referenzmodenraumspektrum $RM(f_{r1}, f_i)$ in Fig. 7.3 sowie das Raumspektrum $RS(t_2, f_{r2}, f_i)$ gemäß Fig. 5.4 mit dem Referenzmodenraumspektrum $RM(f_{r2}, f_i)$ gemäß Fig. 7.4 und das Raumspektrum $RS(t_2, f_{r3}, f_i)$ gemäß Fig. 5 mit dem Referenzmodenraumspektrum $RM(f_{r3}, f_i)$ gemäß Fig. 7.5 multipliziert werden. Fig. 8.1 zeigt die Produkte P in Abhängigkeit von der Frequenz $f_i$ und der Raumfrequenz $f_{ri}$. Die einzelnen Produkte P bei der Frequenz $f_1$ werden über alle Raumfrequenzen $f_{ri}$ summiert. Die Produkte P bei den Frequenzen $f_2$, $f_3$ und $f_4$ werden in gleicher Weise über alle Raumfrequenzen $f_{ri}$ aufsummiert, so daß sich ein Kreuzspektrum $\sigma(f_i)$ in Abhängigkeit von den Frequenzen $f_1$, $f_2$, $f_3$, $f_4$ ausbildet, das ein Maß für die räumliche Kohärenz $\gamma^2(f_i)$ ist und in Fig. 8.2 gezeigt ist.

Zur Berechnung der räumlichen Kohärenz $\gamma^2(f_i)$ wird dieses Kreuzspektrum $\sigma(f_i)$ normiert. Dazu wird ein Leistungsraumspektrum $S_z(f_2, f_i)$ und ein Leistungsmodenraumspektrum $S_m(f_i)$ berechnet. Der Kreuzspektrum-Rechen-

schaltung 13 in Fig. 1 ist eine Leistungsrechenstufe 14 für das Raumspektrum $RS(t_2, f_{ri}, f_i)$, wie es in Fig. 5.1 gezeigt ist, nachgeschaltet, in der das Raumspektrum $RS(t_2, f_{ri}, f_i)$ quadriert und über den Raumfrequenzen $f_{ri}$ aufsummiert oder integriert wird. In einer zweiten Leistungsrechenschaltung 15 wird das Referenzmodenraumspektrum RM, wie es in Fig. 7.1 gezeigt ist, betragsmäßig quadriert und über der Raumfrequenz $f_{ri}$ aufsummiert oder integriert und bildet ein Leistungsmodenraumspektrum $S_m(f_i)$. Das Leistungsraumspektrum $S_z(f_i)$ ist in Fig. 9 das Leistungsmodenraumspektrum $S_m(f_i)$ ist in Fig. 10 in Abhängigkeit von $f_i$ gezeigt.

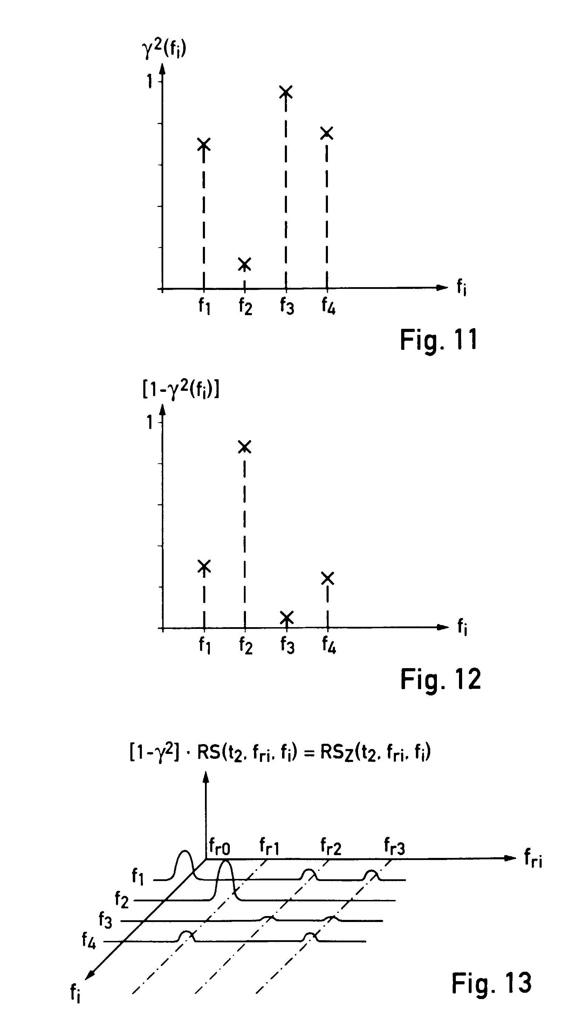

In einer Kohärenzschaltung 20 wird das Kreuzspektrum $\sigma(f_i)$ aus der Kreuzspektrum-Rechenschaltung 13 konjugiert komplex multipliziert und mit dem Leistungsraumspektrum $S_z(t_2, f_i)$ aus der Leistungsrechenstufe 14 und dem Leistungsmodenraumspektrum $S_M(f_i)$ aus der Leistungsmodenspektrumschaltung 15 durch Quotientenbildung zur räumlichen Kohärenz $\gamma^2(f_i)$ verknüpft, die in Fig. 11 in Abhängigkeit von der Frequenz $f_i$ dargestellt ist. Die räumliche Kohärenz

$$\gamma^2(f_i) = \frac{\sigma(f_i) \cdot \sigma * (f_i)}{S_Z \cdot S_M}$$

ist frequenzabhängig und am kleinsten bei der Frequenz $f_2$. Die Komponente mit der Frequenz $f_2$ ist also nicht durch Körperschall verursacht, sondern stammt von einer Nutzschallwelle des zu peilenden Ziels. Die räumliche Kohärenz $\gamma^2$ ist bei den Frequenzen $f_3$ und $f_4$ größer, da sich dort das Empfangssignal aus Zielanteilen und Körperschallanteilen zusammensetzt, wie auch ein Vergleich zwischen dem Referenzmodenraumspektrum in Fig. 7.1 mit den Raumspektren gemäß Fig. 4.1 bzw. Fig. 5.1 ersichtlich macht.

Die räumliche Kohärenz $\gamma^2$ ist eine normierte Größe, die ihren Maximalwert bei Eins hat, nämlich dann, wenn nur Körperschallstörungen empfangen wurden. Es wird in der Kohärenzschaltung 20 die Differenz $(1-\gamma^2)$ gebildet, die in Fig. 12 dargestellt ist, und mit dem Raumspektrum gemäß Fig. 5.1 in einem Multiplizierblock 21 verknüpft. Am Ausgang des Multiplizierblocks 21 ist das körperschallbefreite Raumspektrum $RS_z(t_2, f_{ri}, f_i)$ in Abhängigkeit von der Raumfrequenz $f_{ri}$ und der Frequenz $f_i$ zum Empfangszeitpunkt $t_2$ abnehmbar, das in Fig. 13 gezeigt ist. Dem Multiplizierblock 21 ist eine Rücktransformationsschaltung 23 nachgeordnet, die den Richtungsbildner 11 ansteuert. Die Rücktransformierte $F^{-1}RS_z$ des körperschallbefreiten Raumspektrums $RS_z$ liefert ein "Shading" der Empfangssignale der elektroakustischen Wandler.

Hinter dem Richtungsbildner 11 ist ein Umschalter 30 und ein Raumfrequenztiefpaß 31 vorgesehen, dessen Raumgrenzfrequenz $f_{rg}$ in Abhängigkeit von der Länge 1 der Antenne 10, der Wahl eines Winkelsektors $\alpha_{max}$, der in Betracht gezogen werden soll, und einer maximalen Frequenz $f_{i\,max}$ der Empfangssignale

$$f_{rg} = \frac{f_{i\,max} \cdot l \cdot \sin\alpha_{max}}{c}$$

einstellbar ist, wobei c die Schallgeschwindigkeit ist. Der Raumfrequenztiefpaß 31 weist eine Frequenzanalyseschaltung zum Bestimmen der maximalen Frequenz $f_i$ auf. Die Frequenzanalyseschaltung erhält wahlweise das Empfangssignal eines der elektroakustischen Wandler der Antenne 10, das größte Gruppensignal oder ein Körperschallsignal eines Körperschallaufnehmers, der nicht gezeigt ist.

Komponenten des Raumspektrums $RS(t_i, f_{ri}, f_i)$, die Frequenzen $f_i$ des Körperschalls aufweisen und deren Raumfrequenzen $f_{ri}$ kleiner als die Grenzraumfrequenz $f_{rg}$ ist, werden zur Berechnung der Kohärenz $\gamma^2$ herangezogen.

**Patentansprüche**

1. Verfahren zur Unterdrückung von Körperschallstörungen bei einer akustischen Ortungsanlage auf einem Trägerfahrzeug mit elektroakustischen Wandlern, die vor oder auf einer körperschallführenden Wandung angeordnet sind, wobei die Körperschallstörungen durch Schwingungen der Wandung verursacht und auf die elektroakustischen Wandler übertragen werden, dadurch gekennzeichnet, daß Empfangssignale der Wandler zu Richtcharakteristiken zusammengefaßt werden, daß Referenzrichtcharakteristiken durch zeitliche Mittelung oder Autokorrelation der Richtcharakteristiken getrennt für jede Empfangsrichtung über einen vorgebbaren Zeitraum bestimmt werden, daß eine räumliche Kohärenz $(\gamma^2)$ zwischen den momentan gebildeten Richtcharakteristiken und den Referenzrichtcharakteristiken ermittelt wird und die momentan gebildeten Richtcharakteristiken mit der räumlichen Kohärenz $(\gamma^2)$ bewertet werden.

2. Verfahren nach Anspruch 1, dadurch gekennzeichnet, daß Gruppensignale der Richtcharakteristiken mit der räum-

lichen Kohärenz ($\gamma^2$) multipliziert werden und die Differenz zwischen den Gruppensignalen der momentan gebildeten Richtcharakteristiken und den mit der räumlichen Kohärenz ($\gamma^2$) multiplizierten Gruppensignalen gebildet wird und die von Körperschallstörungen befreiten Gruppensignale liefern.

3. Verfahren nach Anspruch 1, dadurch gekennzeichnet, daß Frequenzspektren von Gruppensignalen der Richtcharakteristiken gebildet werden und Spektrallinien gleicher Frequenz ($f_i$) den Empfangsrichtungen ($\alpha_i$) zugeordnet werden und innerhalb eines vorgebbaren Winkelsektors eine Winkelfunktion (R) bilden, daß die Autokorrelationsfunktion der Winkelfunktion für den vorgebbaren Zeitraum bestimmt wird und eine Referenzwinkelfunktion liefert, daß die Referenzwinkelfunktion mit der momentanen Winkelfunktion multipliziert und innerhalb des Winkelsektors aufsummiert wird und ein Maß für die räumliche Kohärenz ($\gamma^2$) der Richtcharakteristiken liefert.

4. Verfahren nach Anspruch 3, dadurch gekennzeichnet, daß die Differenz zwischen der Winkelfunktion (R) und der mit der Kohärenz ($\gamma^2$) multiplizierten Winkelfunktion gebildet wird, die je Frequenz ($f_i$) die körperschallstörungsbefreiten Gruppensignale der Richtcharakteristiken liefern.

5. Verfahren nach Anspruch 1, dadurch gekennzeichnet, daß ein Raumspektrum (RS) durch Fourier-Transformation der Empfangssignale der Wandler vom Ortsbereich ($x_i$) in einen Raumfrequenzbereich ($f_{ri}$) ermittelt wird und ein Muster der Richtcharakteristiken innerhalb eines Winkelsektors liefert, wobei Spektralanteile des Raumspektrums (RS) den Gruppensignalen und ihre Raumfrequenzen ($f_{ri}$) den Empfangsrichtungen ($\alpha_i$) entsprechen, daß ein zeitlicher Mittelwert oder die Autokorrelationsfunktion des Raumspektrums (RS) bestimmt wird und ein Referenzmodenraumspektrum (RM) liefert, daß das momentan gebildete Raumspektrum (RS) und das Referenzmodenraumspektrum (RM) konjugiert komplex multipliziert werden und das Produkt (P) über Raumfrequenzen ($f_{ri}$), die dem Winkelsektor entsprechen, aufsummiert wird und das so gebildete Kreuzspektrum ($\sigma$) ein Maß für die räumliche Kohärenz ($\gamma^2$) ist.

6. Verfahren nach Anspruch 5, dadurch gekennzeichnet, daß ein Leistungsraumspektrum ($S_Z$) und ein Leistungsmodenraumspektrum ($S_M$) durch Bilden des Betragsquadrats und Aufsummieren über den Raumfrequenzen ($f_{ri}$), die dem Winkelsektor entsprechen, bestimmt werden und daß durch Quotientenbildung mit dem Kreuzspektrum ($\sigma$) die räumliche Kohärenz ($\gamma^2$) berechnet wird.

7. Verfahren nach Anspruch 6, dadurch gekennzeichnet, daß das konjugiert komplexe Produkt des Kreuzspektrums ($\sigma$) bestimmt wird und der Quotient des konjugiert komplexen Produkts des Kreuzspektrums ($\sigma$) durch das Leistungsraumspektrum ($S_Z$) und das Leistungsmodenraumspektrum ($S_M$) geteilt wird und die räumliche Kohärenz liefert.

8. Verfahren nach einem der Ansprüche 5 bis 7, dadurch gekennzeichnet, daß die Differenz zwischen dem Raumspektrum (RS) und dem mit der Kohärenz ($\gamma^2$) multiplizierten Raumspektrum (RS) gebildet wird und durch Fourier-Rücktransformation in den Ortsbereich ($x_i$) die Rücktransformierte ($F^{-1}RS_Z$) gebildet wird und daß die Empfangssignale der Wandler mit der Rücktransformierten ($F^{-1}RS_Z$) multipliziert werden.

9. Verfahren nach einem der Ansprüche 1 bis 8, dadurch gekennzeichnet, daß die Referenzrichtcharakteristiken oder das Referenzmodenraumspektrum (RM) aus Empfangssignalen der elektroakustischen Wandler zu einer Zeit, in der nur Körperschallstörungen empfangen werden und sich keine schallabstrahlenden Ziele in der Nähe der Ortungsanlage befinden, für unterschiedliche Betriebszustände des Trägerfahrzeugs bestimmt und abgespeichert werden.

10. Verfahren nach Anspruch 1 bis 8, dadurch gekennzeichnet, daß die Referenzrichtcharakteristiken oder das Referenzmodenraumspektrum (RM) aus Signalen mehrerer Körperschallaufnehmer gebildet wird, deren Empfangsrichtungen ($\alpha_i$) mit den Empfangsrichtungen ($\alpha_i$) der Richtcharakteristiken, die aus den Empfangssignalen der elektroakustischen Wandler gebildet werden, übereinstimmen.

11. Verfahren nach einem der Ansprüche 1 bis 8, dadurch gekennzeichnet, daß die räumliche Kohärenz ($\gamma^2$) für eine vorgebbare Anzahl von Frequenzen ($f_i$) der Schwingungen bestimmt wird.

12. Verfahren nach Anspruch 11, dadurch gekennzeichnet, daß das Empfangssignal oder das Gruppensignal einer Frequenzanalyse unterzogen wird, daß Spektralanteile, die während des vorgebbaren Zeitraum über einem vorgebbaren Pegel liegen, ermittelt und ihre Frequenzen ($f_i$) bestimmt werden und die Anzahl bilden.

**13.** Verfahren nach Anspruch 11, dadurch gekennzeichnet, daß die Anzahl der Frequenzen ($f_i$) aus einem Signal eines oder mehrerer Körperschallaufnehmer ermittelt wird.

**14.** Verfahren nach einem der Ansprüche 5 bis 13, dadurch gekennzeichnet, daß abhängig von einer Ausdehnung der Antenne (10) mit den elektroakustischen Wandlern, einer maximalen Frequenz ($f_{i\,max}$) der Empfangssignale und dem Winkelsektor ($\pm\alpha_{max}$) eine Raumgrenzfrequenz ($f_{rg}$) ermittelt wird und Raumspektrumanteile oberhalb der Raumgrenzfrequenz ($f_{rg}$) auf Null gesetzt werden.

**15.** Vorrichtung zum Ausüben des erfindungsgemäßen Verfahrens nach einem der Ansprüche 1 bis 14 für eine akustische Ortungsanlage auf einem Trägerfahrzeug mit einer Antenne (10), die elektroakustische Wandler aufweist und auf oder vor einer Wandung des Trägerfahrzeugs angeordnet ist, dadurch gekennzeichnet, daß der Antenne (10) ein Richtungsbildner (11) zum Bestimmen von Richtcharakteristiken oder einer Winkelfunktion (R) oder eines Raumspektrums (RS) nachgeordnet ist, daß dem Richtungsbildner (11) ein Mittelwertrechner (12), eine Kreuzspektrum-Rechenschaltung (13) und eine Leistungsrechenstufe (14) nachgeordnet sind, daß der Mittelwertrechner (12) zum Bestimmen eines zeitlichen Mittelwerts oder der Autokorrelationsfunktion ausgebildet ist und ausgangsseitig mit der Kreuzspektrum-Rechenschaltung (13) verbunden ist, daß die Kreuzspektrum-Rechenschaltung (13) zum Multiplizieren, Integrieren oder Summieren über einen Winkelsektor oder über Raumfrequenzen ausgebildet ist, daß der Mittelwertrechner (12) mit einer Leistungsrechenschaltung (15) verbunden ist, daß eine Kohärenzschaltung (20) mit der Kreuzspektrum-Rechenschaltung (13), der Leistungsrechenstufe (14) und der Leistungsrechenschaltung (15) verbunden ist, daß der Kohärenzschaltung (20) ein Multiplizierblock (21) nachgeordnet ist, dessen zweiter Eingang mit dem Richtungsbildner (11) zusammengeschaltet ist.

**16.** Vorrichtung nach Anspruch 15, dadurch gekennzeichnet, daß dem Multiplizierblock (21) eine Schaltung (23) zur Rücktransformation nachgeordnet ist, von der der Richtungsbildner (11) ansteuerbar ist.

**17.** Vorrichtung nach einem der Ansprüche 15 oder 16, dadurch gekennzeichnet, daß zwischen dem Ausgang des Richtungsbildners (11) und den Eingängen des Mittelwertrechners (12), der Kreuzspektrum-Rechenschaltung (13) und der Leistungsrechenstufe (14) ein Raumfrequenztiefpaß (22) mit nachgeschaltetem Umschalter (30) geschaltet ist.

**18.** Vorrichtung nach Anspruch 17, dadurch gekennzeichnet, daß der Raumfrequenztiefpaß (22) eine Frequenzanalyseschaltung zum Bestimmen der Frequenz ($f_i$) des Empfangssignals eines der elektroakustischen Wandler oder eines Körperschallaufnehmers oder eines Gruppensignals enthält.

**Claims**

**1.** Method of suppressing interference due to structure-borne sound in an acoustic position-finding installation on a carrier vehicle with electroacoustic transducers which are disposed in front of or on a wall which conducts structure-borne sound, wherein the interference due to structure-borne sound is caused by vibrations of the wall and is transmitted to the electroacoustic transducers, characterised in that received signals of the transducers are combined into directivity characteristics, that reference directivity characteristics are determined separately for each reception direction over a predeterminable time period by time averaging or autocorrelation of the directivity characteristics, that a spatial coherence ($\gamma^2$) between the currently formed directivity characteristics and the reference directivity characteristics is ascertained and the currently formed directivity characteristics are evaluated with the spatial coherence ($\gamma^2$).

**2.** Method as claimed in Claim 1, characterised in that group signals of the directivity characteristics are multiplied by the spatial coherence ($\gamma^2$) and the difference between the group signals of the currently formed directivity characteristics and the group signals multiplied by the spatial coherence ($\gamma^2$) is formed, supplying the group signals freed of interference due to structure-borne sound.

**3.** Method as claimed in Claim 1, characterised in that frequency spectra of group signals of the directivity characteristics are formed and spectral lines of equal frequency ($f_i$) are co-ordinated with the reception directions ($\alpha_i$) and form an angle function (R) within a predeterminable angle sector, that the autocorrelation function of the angle function for the predeterminable time period is determined and supplies a reference angle function, that the reference angle function is multiplied by the current angle function and added up within the angle sector and supplies a measurement for the spatial coherence ($\gamma^2$) of the directivity characteristics.

4. Method as claimed in Claim 3, characterised in that the difference between the angle function (R) and the angle function multiplied by the coherence ($\gamma^2$) is formed, which supplies for each frequency ($f_i$) the group signals of the directivity characteristics which are freed of interference due to structure-borne sound.

5. Method as claimed in Claim 1, characterised in that a space spectrum (RS) is ascertained by Fourier transformation of the received signals of the transducers from the location range ($x_i$) into a space frequency range ($f_{ri}$) and supplies a pattern of the directivity characteristics within an angle sector, wherein spectral components of the space spectrum (RS) correspond to the group signals and their space frequencies ($f_{ri}$) correspond to the reception directions ($\alpha_i$), that a time average value or the autocorrelation function of the space spectrum (RS) is determined and supplies a reference mode space spectrum (RM), that the currently formed space spectrum (RS) and the reference mode space spectrum (RM) are conjugate complex multiplied and the product (P) over space frequencies ($f_{ri}$) which correspond to the angle sector is added up and the cross spectrum ($\sigma$) thus formed is a measurement for the spatial coherence ($\gamma^2$).

6. Method as claimed in Claim 5, characterised in that a power space spectrum ($S_z$) and a power mode space spectrum ($S_M$) are determined by formation of the square of the quantity and adding up over the space frequencies ($f_{ri}$) which correspond to the angle sector, and that the spatial coherence ($\gamma^2$) is calculated by formation of the quotient with the cross spectrum ($\sigma$).

7. Method as claimed in Claim 6, characterised in that the conjugate complex product of the cross spectrum ($\sigma$) is determined and the quotient of the conjugate complex product of the cross spectrum ($\sigma$) is divided by the power space spectrum ($S_z$) and the power mode space spectrum ($S_M$) and supplies the spatial coherence.

8. Method as claimed in one of Claims 5 to 7, characterised in that the difference between the space spectrum (RS) and the space spectrum (RS) multiplied by the coherence ($\gamma^2$) is formed and the back-transform ($F^{-1}RS_z$) is formed by Fourier back-transformation into the location range ($x_i$), and that the received signals of the transducers are multiplied by the back-transform ($F^{-1}RS_z$).

9. Method as claimed in one of Claims 1 to 8, characterised in that from received signals of the electroacoustic transducers at a time in which only interference due to structure-borne sound is received and no sound-radiating targets are located in the vicinity ofthe position-finding installation, the reference directivity characteristics or the reference mode space spectrum (RM) for different operating states of the carrier vehicle are determined and are stored.

10. Method as claimed in Claim 1 to 8, characterised in that the reference directivity characteristics or the reference mode space spectrum (RM) are formed from signals of several structure-borne sound pickups, the reception directions ($\alpha_i$) of which correspond to the reception directions ($\alpha_i$) of the directivity characteristics which are formed from the received signals of the electroacoustic transducers.

11. Method as claimed in one of Claims 1 to 8, characterised in that the spatial coherence ($\gamma^2$) for a predeterminable number of frequencies ($f_i$) of the vibrations is determined.

12. Method as claimed in Claim 11, characterised in that the received signal or the group signal is subjected to a frequency analysis, that spectral components which during the predeterminable time period lie above a predeterminable level are ascertained and their frequencies ($f_i$) are determined and form the number.

13. Method as claimed in Claim 11, characterised in that the number of frequencies ($f_i$) is ascertained from a signal of one or more structure-borne sound pickups.

14. Method as claimed in one of Claims 5 to 13, characterised in that depending upon an extension of the antenna (10) with the electroacoustic transducers, upon a maximum frequency ($f_{i\,max}$) of the received signals and upon the angle sector ($\pm\alpha_{max}$) a cutoff space frequency ($f_{rg}$) is ascertained and space spectrum components above the cutoff space frequency ($f_{rg}$) are set to zero.

15. Apparatus for carrying out the method according to the invention as claimed in one of Claims 1 to 14 for an acoustic position-finding installation on a carrier vehicle with an antenna (10) which has electroacoustic transducers and is disposed on or in front of a wall of the carrier vehicle, characterised in that a direction former (11) for determining directivity characteristics or an angle function (R) or a space spectrum (RS) is disposed downstream of the antenna (10), that the average value computer (12) is designed to determine a time average value or the autocorrelation function and is connected on the output side to the cross spectrum arithmetic circuit (13), that the cross spectrum arithmetic circuit (13) is designed for multiplication, integration or addition over an angle sector or over space frequencies, that the average value computer (12) is connected to a power arithmetic circuit (15), that a coherence circuit (20) is connected to the cross spectrum arithmetic circuit (13), to the power computing stage (14) and to the power arithmetic circuit (15), that a multiplication block (21) of which the second input is connected to the directivity former (11) is disposed downstream of the coherence circuit (20).

16. Apparatus as claimed in Claim 15, characterised in that a circuit (23) for back-transformation by which the directivity former (11) can be controlled is disposed downstream of the multiplication block (21).

17. Apparatus as claimed in one of Claims 15 or 16, characterised in that a space frequency low-pass (22) with changeover switch (30) connected downstream is connected between the output of the directivity former (11) and the inputs of the average value computer (12), of the cross spectrum arithmetic circuit (13) and of the power computing stage (14).

18. Apparatus as claimed in Claim 17, characterised in that the space frequency low-pass (22) contains a frequency analysis circuit for determining the frequency ($f_i$) of the received signal of one of the electroacoustic transducers or of a structure borne sound pickup or of a group signal.

## Revendications

1. Procédé pour supprimer des perturbations dues au bruit de structure d'une installation de repérage acoustique installée sur un véhicule porteur et comportant des transducteurs électroacoustiques, qui sont disposés en avant de ou sur une paroi transmettant le bruit de structure, les perturbations dues au bruit de structure étant provoquées par des vibrations de la paroi et étant transmises aux transducteurs électroacoustiques, caractérisé en ce que les signaux de réception des transducteurs sont réunis pour former des caractéristiques directionnelles, que des caractéristiques directionnelles de référence sont déterminées par formation de la moyenne dans le temps ou par auto-corrélation des caractéristiques directionnelles séparément pour chaque direction de réception, pendant un intervalle de temps pouvant être prédéterminé, qu'une cohérence spatiale ($\gamma^2$) entre les caractéristiques directionnelles formées à un instant donné et les caractéristiques directionnelles de référence est déterminée et que les caractéristiques directionnelles formées à un instant donné sont pondérées par la cohérence spatiale ($\gamma^2$).

2. Procédé selon la revendication 1, caractérisé en ce que des signaux de groupe des caractéristiques directionnelles sont multipliés par la cohérence spatiale ($\gamma^2$) et la différence entre les signaux de groupe des caractéristiques directionnelles formées à un instant donné et les signaux de groupe multipliés par la cohérence spatiale ($\gamma^2$) est formée et fournit les signaux de groupe libérés par les perturbations du bruit de structure.

3. Procédé selon la revendication 1, caractérisé en ce que des spectres de fréquences de signaux de groupe des caractéristiques directionnelles sont formés et des raies spectrales de même fréquence ($f_i$) sont associées aux directions de réception ($\alpha_i$) et forment, à l'intérieur d'un secteur angulaire pouvant être prédéterminé, une fonction angulaire (R), que la fonction d'autocorrélation de la fonction angulaire est déterminée pour l'intervalle de temps pouvant être prédéterminé et fournit une fonction angulaire de référence, que la fonction angulaire de référence est multipliée par la fonction angulaire instantanée et est additionnée à l'intérieur du secteur angulaire et fournit une mesure de la cohérence spatiale ($\gamma^2$) des caractéristiques directionnelles.

4. Procédé selon la revendication 3, caractérisé en ce que la différence entre la fonction angulaire (R) et la fonction angulaire multipliée par la cohérence ($\gamma^2$) est formée, différence, qui fournit, pour chaque fréquence ($f_i$), les signaux de groupe, qui sont exemptes de la perturbation du bruit de structure, des caractéristiques directionnelles.

5. Procédé selon la revendication 1, caractérisé en ce qu'un spectre spatial (RS) est déterminé par transformation de Fourier des signaux de réception des transducteurs depuis le domaine local ($x_i$) dans une gamme de fréquences spatiales ($f_{ri}$) et fournit un modèle des caractéristiques directionnelles à l'intérieur d'un secteur angulaire, des composantes spectrales du spectre spatial (RS) correspondant aux signaux de groupe, et leurs fréquences spatiales ($f_{ri}$) correspondant aux directions de réception ($\alpha_i$), qu'une valeur moyenne dans le temps où la fonction d'autocorrélation du spectre spatial (RS) est déterminée et fournit un spectre spatial de mode de référence (RM), que le spectre spatial (RS) formé à un instant donné et le spectre spatial de mode de référence (RM) sont multipliés selon une multiplication complexe conjuguée, et que la sommation du produit (P) est effectuée sur des fréquences spatiales ($f_{ri}$), qui correspondent au secteur angulaire, et que le spectre croisé ainsi formé ($\sigma$) est une mesure de la cohérence spatiale ($\gamma^2$).

6. Procédé selon la revendication 5, caractérisé en ce qu'un spectre spatial de puissance ($S_Z$) et un spectre spatial de mode de puissance ($S_M$) sont déterminés par formation du carré de la valeur et sommation sur les fréquences spatiales ($f_{ri}$), qui correspondent au secteur angulaire, et que la cohérence spatiale ($\gamma^2$) est calculée par formation du quotient avec le spectre croisé ($\sigma$).

7. Procédé selon la revendication 6, caractérisé en ce que le produit complexe conjugué du spectre croisé ($\sigma$) est déterminé et que le quotient du produit complexe conjugué du spectre croisé ($\sigma$) est divisé par le spectre spatial de puissance ($S_Z$) et par le spectre spatial de mode de puissance ($S_M$) et ce qui donne la cohérence spatiale.

8. Procédé selon l'une des revendications 5 à 7, caractérisé en ce que la différence entre le spectre spatial (RS) et le spectre spatial (RS) multiplié par la cohérence ($\gamma^2$) est formée et que la transformée inverse ($F^{-1}RS_Z$) est formée au moyen de la transformation de Fourier inverse dans la gamme spatiale ($x_i$) et les signaux de réception des transducteurs sont multipliés par la transformée inverse ($F^{-1}RS_Z$).

9. Procédé selon l'une des revendications 1 à 8, caractérisé en ce que les caractéristiques directionnelles de référence ou le spectre spatial du mode de référence (RM) sont déterminés à partir des signaux de réception des transducteurs électroacoustiques à un instant, auquel seules les perturbations de bruit de structure sont reçues et auquel aucune cible émettant un rayonnement ne se trouve à proximité de l'installation de repérage, pour différents états de fonctionnement du véhicule porteur et sont mémorisées.

10. Procédé selon l'une des revendications 1 à 8, caractérisé en ce que les caractéristiques directionnelles de référence ou le spectre spatial du mode de référence (RM) sont formés à partir de signaux de plusieurs capteurs du bruit de structure, dont les directions de réception ($\alpha_i$) coïncident avec les directions de réception ($\alpha_i$) des caractéristiques directionnelles, qui sont formées par les signaux de réception des transducteurs électroacoustiques.

11. Procédé selon l'une des revendications 1 à 8, caractérisé en ce que la cohérence spatiale ($\gamma^2$) est déterminée pour un nombre pouvant être prédéterminé de fréquences ($f_i$) des vibrations.

12. Procédé selon la revendication 11, caractérisé en ce que le signal de réception ou le signal de groupe est soumis à une analyse de fréquences, que des composantes spectrales, qui sont situées pendant l'intervalle de temps pouvant être prédéterminé au-dessus d'un niveau pouvant être prédéterminé, sont déterminées et leurs fréquences ($f_i$) sont déterminées et forment le nombre.

13. Procédé selon la revendication 11, caractérisé en ce que le nombre des fréquences ($f_i$) est déterminé à partir d'un signal d'un ou de plusieurs capteurs du bruit de structure.

14. Procédé selon l'une des revendications 5 à 13, caractérisé en ce qu'une fréquence spatiale limite ($f_{rg}$) est déterminée en fonction d'une étendue de l'antenne (10) avec les transducteurs électroacoustiques, en fonction d'une fréquence maximale ($f_{i\,max}$) des signaux de réception et en fonction du secteur angulaire ($\pm\alpha_{max}$), et les composantes spectrales spatiales se trouvant au-dessus de la fréquence spatiale limite ($f_{rg}$) sont réglées égales à zéro.

15. Dispositif pour la mise en oeuvre du procédé conforme à l'invention selon l'une des revendications 1 à 14 pour une installation de repérage acoustique située sur un véhicule porteur et comportant une antenne (10), qui possède des transducteurs électroacoustiques et est disposée sur ou en avant d'une paroi du véhicule porteur, caractérisé en ce qu'en aval de l'antenne (10) est disposé un dispositif (11) de détermination de direction servant à déterminer des caractéristiques directionnelles ou une fonction angulaire (R) ou un spectre spatial (RS), qu'un calculateur de valeur moyenne (12), un circuit de calcul de spectre croisé (13) et un étage de calcul de puissance (14) sont disposés en aval du dispositif (11) de détermination de direction, que le calculateur de valeur moyenne (12) est agencé de manière à déterminer une valeur moyenne temporelle ou la fonction d'autocorrélation et est relié, côté sortie, au circuit (13) de calcul du spectre croisé, que le circuit (13) de calcul du spectre croisé est agencé de manière à réaliser une multiplication, une intégration ou une sommation sur un secteur angulaire ou sur des fréquences spatiales, que le calculateur (12) de valeur moyenne est relié à un circuit de calcul de puissance (15), qu'un circuit de cohérence (20) est relié au circuit (13) de calcul du spectre croisé, à l'étage de calcul de puissance (14) et au circuit de calcul de puissance (15), et qu'en aval du circuit de cohérence (20) est disposé un bloc multipli-cateur (21), dont la seconde entrée est interconnectée au dispositif (11) de calcul de détermination de direction.

16. Dispositif selon la revendication 15, caractérisé en ce qu'en aval du bloc multiplicateur (21) est disposé un circuit de transformation inverse (23), qui peut commander le dispositif (11) de détermination de direction.

17. Dispositif suivant l'une des revendications 15 ou 16, caractérisé en ce qu'un filtre passe-bas (22) pour la fréquence spatiale, en aval duquel est branché un commutateur (30), est branché entre la sortie du dispositif (11) de détermination de direction et les entrées du calculateur (12) de valeur moyenne, du circuit (13) de calcul du spectre croisé et de l'étage de calcul de puissance (14).

18. Dispositif selon la revendication 17, caractérisé en ce que le filtre passe-bas (22) pour les fréquences spatiales possède un circuit d'analyse des fréquences servant à déterminer la fréquence ($f_i$) du signal de réception d'un transducteur électroacoustique ou d'un capteur du bruit de structure, ou d'un signal de groupe.

Fig. 1

**Fig. 2**

x_i

**Fig. 3**

$R(\alpha_i, f_1)$

$\alpha_i$

$\alpha_0$  $\alpha_1$  $\alpha_2$  $\alpha_3$

$RS(t_1, f_{ri}, f_i)$

$f_{r0}$  $f_{r1}$  $f_{r2}$  $f_{r3}$

$f_{ri} \sim lf_i \cdot \sin \alpha_i$

$f_1$

$f_2$

$f_3$

$f_4$

$f_i$

**Fig. 4.1**

$RS(t_1, f_{ri}, f_1)$

$f_{r0}$  $f_{r1}$  $f_{r2}$  $f_{r3}$  $f_{ri}$

**Fig. 4.1.1**

$RS(t_2, f_{ri}, f_i)$

$f_{r0}$  $f_{r1}$  $f_{r2}$  $f_{r3}$  $f_{ri}$

$f_1$

$f_2$

$f_3$

$f_4$

$f_i$

**Fig. 5.1**

$RS(t_2, f_{ri}, f_1) \cong R(t_2, \alpha_i, f_1)$

$f_{r0}$  $f_{r1}$  $f_{r2}$  $f_{r3}$  $f_{ri}$

**Fig. 5.1.1**

$RS(t_3, f_{ri}, f_i)$

$f_{r0}$  $f_{r1}$  $f_{r2}$  $f_{r3}$  $f_{ri}$

$f_1$

$f_2$

$f_3$

$f_4$

$f_i$

**Fig. 6.1**

$RS(t_3, f_{ri}, f_1)$

$f_{r0}$  $f_{r1}$  $f_{r2}$  $f_{r3}$  $f_{ri}$

**Fig. 6.1.1**

$$RM = \sum_{t_i = t_1}^{t_3} RS(t_i, f_{ri}, f_i)$$

Fig. 7.1

RS($t_2$, $f_{r0}$, $f_i$)

Fig. 5.2

RM($f_{r0}$, $f_i$)

Fig. 7.2

RS($t_2$, $f_{r1}$, $f_i$)

Fig. 5.3

RM($f_{r1}$, $f_i$)

Fig. 7.3

RS($t_2$, $f_{r2}$, $f_i$)

Fig. 5.4

RM($f_{r2}$, $f_i$)

Fig. 7.4

RS($t_2$, $f_{r3}$, $f_i$)

Fig. 5.5

RM($f_{r3}$, $f_i$)

Fig. 7.5

$$P(t_2, f_{ri}, f_i)$$

Fig. 8.1

$$\sum_{f_{ri}=f_{r1}}^{f_{r3}} P(t_2, f_i) = \sigma(f_i)$$

Fig. 8.2

$$\sum_{f_{ri}=f_{r0}}^{f_{r3}} RS(f_i) = S_z(f_i)$$

Fig. 9

$$\sum_{f_{ri}=f_{r0}}^{f_{r3}} RM(f_i) = S_M(f_i)$$

Fig. 10

19

$\gamma^2(f_i)$

Fig. 11

$[1-\gamma^2(f_i)]$

Fig. 12

$[1-\gamma^2] \cdot RS(t_2, f_{ri}, f_i) = RS_Z(t_2, f_{ri}, f_i)$

Fig. 13